# EUROPÄISCHE PATENTANMELDUNG

(11) **EP 1 041 804 A2**
(43) Veröffentlichungstag der Anmeldung: **04.10.2000**
(21) Anmeldenummer: 00102898.4
(22) Anmeldetag: 12.02.2000
(51) Int. Cl.: H04M 17/02

(54) **Verfahren für die sichere und schnelle Handhabung von Chipkarten für Kartentelefone**

(30) Priorität: 01.04.1999 DE 19914959
(71) Anmelder: Deutsche Telekom AG, 53113 Bonn (DE)
(72) Erfinder: Müller, walter, 73441 Bopfingen (DE)

(57) **Zusammenfassung**

Telekommunikationsunternehmen bieten heutzutage einen Service/Dienst an, mit dem man von fast jedem Telefon in der Welt über ein vorausbezahltes Telefonkonto zum Beispiel mit einer vorausbezahlten Telefonkarte oder über ein eigenes in einer zentralen Datenbank angelegtes Telefonkonto telefonieren kann. Dieser Service ist unter der Bezeichnung Calling Card-Service weltweit bekanntgeworden. Man benötigt hierfür eine Zugangsnummer zum Service, eine persönliche Service-/Kartennummer und eine Geheimnummer oder nur eine Zugangsnummer und eine Geheimnummer. Im vorliegenden Falle wird ein Verfahren für Chipkartentelefone oder dergleichen und Speicherchipkarten angegeben, das die im Speicherbereich eines Kartenchips hinterlegten numerischen Daten automatisch übermittelt. Das Verfahren wird durch eine Kombination aus einer Sonderfunktionstaste, die als individuell programmierbare Zielwahltaste ausgeführt ist, die mit einer Rufnummer, zum Beispiel eines Dienstleisters belegt ist und am Chipkartentelefon angeordnet ist und einem Nummernspeicher auf der Chipkarte, in dem die Zugangsnummer gespeichert ist, realisiert. Für die Chipkarte ist deshalb nur ein technisch einfach aufgebauter Speicherchip, mit einem kleinen Speicherbereich völlig ausreichend. Die Eingabe der Service-Zugangsnummer, die Wahl oder die Übermittlung der Servicenummer/Kartennummer erfolgt nicht mehr durch den Anwender oder durch die Karte, sondern automatisch durch das Chipkartentelefon bzw. eine entsprechend ausgeführte Lesestation für die Chipkarte. Dies erspart dem Anwender die Eingabe einer mehrstelligen Nummer, wie zum Beispiel der zwölfstelligen Kartennummer/Servicenummer beim Calling Card-Service der Deutschen Telekom AG.

## Beschreibung

Die Erfindung betrifft ein Verfahren für die sichere und schnelle Handhabung von Chipkarten für Kartentelefone nach dem Oberbegriff des Patentanspruchs 1.

Konzepte für das Betreiben von elektronischen Geldbörsen auf Chipkarten befinden sich bereits seit einigen Jahren sowohl in der Entwicklung als auch im Einsatz. Sie beinhalten neben der Technik der Chipkarte in den meisten Fällen auch die Sicherheitstechnik für das Zusammenwirken von Chipkarte und Rechner- und Übertragungssystemen sowie die Abrechnung der mit der Chipkarte vorgenommenen Transaktionen. Sowohl national als auch international wurden bereits zahlreiche Konzepte vorgestellt. In einigen Ländern sind Chipkarten für Telefone eingesetzt, wie zum Beispiel
- Feldversuch Eisenstadt, Österreich, seit Dezember 1994
- Avantcard - in Finnland
- Danmond Konzept in Dänemark
- Mondex, in Swinton, England
- darüberhinaus wird unter CIN TC224 WG10 eine "intersect electronic purse" (branchenübergreifende elektronische Geldbörse) standardisiert.

In diesen bekannten Systemen wird grundsätzlich folgendes Verfahren verwendet:

Der erste Schritt ist das Laden von geldwerten Einheiten in die Chipkarte, wobei der Gegenwert, den der Karteninhaber in bar oder auch bargeldlos bezahlen muß, auf einem sogenannten "Pool-Konto" - des Börsenbetreibers hinterlegt wird. Bezahlt ein Karteninhaber anschließend mit seiner Chipkarte, werden geldwerte Einheiten aus der elektronischen Geldbörse herausgebucht und mit Hilfe eines Sicherheitsmoduls zum Terminal des Serviceanbieters übertragen. Dort werden die eingenommenen geldwerten Einheiten entweder zu einen Betrag akkumuliert und mit dem Börsenbetreiber abgerechnet oder aber jeder einzelne Bezahlvorgang wird beim Börsenbetreiber zur Abrechnung eingereicht.

Weiterhin sind elektronische Geldbörsenanwendungen bekannt, die auf einer Mikroprozessorkarte realisiert sind. Bei Mikroprozessoranwendungen erfolgt die Steuerung der Anwendung durch ein Chipkartenbetriebssystem. Auch diese Anwendung zeichnet sich dadurch aus, daß auf der Karte Geldbeträge gespeichert werden, die bei jeder Abbuchung um einen festgelegten Betrag reduziert werden. Der Vorteil der bekannten Mikroprozessorkarten gegenüber den bekannten Speicherkarten besteht darin, daß die Mikroprozessorkarten prüfen können, ob das abbuchende System authentisch ist oder umgekehrt. Diese Überprüfung ist bei einer allerdings preiswerteren Speicherchipkarte nicht möglich.

Die größte Verbreitung haben die Telefonkarten. Telefonkarten sind Speicherchipkarten mit einem Identifikationsbereich und mindestens einem Zählerbereich. Außerdem ist unter der Bezeichnung Virtual Calling Card (VCC) in den USA ein Dienst eingeführt worden, der es dem Kunden ermöglicht, durch Angabe einer Zugangskennung in Verbindung mit einer PIN (Personal Identification Number), von jedem beliebigen Telefon aus zu telefonieren. Diese sogenannten Calling Card-Systeme basieren in der Regel auf einer zentralen Steuereinheit mit entsprechender Datenbank bzw. einem Zentralrechner. Die Gebührenabrechnung erfolgt dabei über ein dein Kunden zugeordnetes Konto in der Datenbank. Dieser Dienst gewinnt zunehmend auch in Europa an Bedeutung. So ist zum Beispiel in "Deutsche Telekom AG - Vision", Februar 1995, Seiten 44 und 45, die T-Card mit Connect Service der Deutschen Telekom beschrieben.

Die Eingabe der Nummern, speziell der Service-/Kartennummer erfolgt nicht automatisch, sondern manuell durch den Anwender. Es besteht damit die Möglichkeit, einen Handsender mit Rufnummernspeicher, einen Kurzwahlspeicher auf der Karte oder eine Chipkarte mit Selbstwahlfunktion anzuwenden, jedoch sind diese Hilfen nicht immer vorhanden, umständlich zu bedienen oder zu teuer.

Außerdem ist durch die DE 198 01 047 A1 eine Telefonkarte mit Selbstwahlfunktion bekanntgeworden. Diese Telefonkarte mit Chip enthält zusätzliche Daten zu folgenden Funktionen:
a) eine vorgegebene Rufnummer, die bei Auslesen in geeigneten Karten-Telefonen zur automatischen Anwahl führt,
b) Anzeige von alphanumerischen Informationen auf dem Display des Lesegerätes.

Die zusätzliche Funktion besteht darin, daß eine automatische Wahlfunktion zu einer auf der Karte gespeicherten Rufnummern bei Telefongeräten mit Kartenleseeinheit auszulösen ist. Durch Einstecken der Telefonkarte in das Lesegerät wird automatisch die auf dem Kartenchip gespeicherte Nummer bzw. Information gelesen und auf dem Display des Telefongerätes angezeigt. Durch Abheben des Hörers erfolgt wieder die Aufforderung zur Zahlung der erforderlichen Gesprächsgebühr (wie bei der Benutzung eines kombinierten Gebührentelefons üblich) oder die Anzeige des auf der Karte befindlichen Gebührenguthabens. Nach Betätigung durch Tastendruck erfolgt ausschließlich die Wahl der von der Karte in den Rufnummernspeicher geladenen Telefonnummer.

Der Nachteil dieser Lösung und auch der heute benutzten anderen Verfahren und Systeme besteht darin, daß nur ein automatisches Wählen mit Hilfe der Chip-Telefonkarte an einem Chipkartentelefon zum Serviceanbieter bzw. Diensteanbieter möglich ist. Es erfolgt keine Datenübermittlung, wie zum Beispiel der Kartennummer und anderer in den Kartenchips hinterlegter numerischer Daten.

Der Erfindung liegt deshalb die Aufgabe zugrunde, ein Verfahren zur sicheren Behandlung bzw. Handhabung mit vorausbezahlten Datenträgern, wie zum Beispiel Chipkarten für Telefonkartensysteme, Geldbörsensysteme, elektronische Buchungssysteme oder äquivalente Systeme, wobei die manuelle Eingabe der langen persönlichen Service/Kartennummer nicht mehr manuell, sondern automatisch erfolgt.

Die erfindungsgemäße Lösung der Aufgabe ist im Kennzeichen des Patentanspruchs 1 charakterisiert.

Weitere Ausgestaltungen der Erfindung bzw. erfindungsgemäße Lösungen sind in den Patentansprüchen 2 bis 6 charakterisiert.

Der Vorteil des vorliegenden Verfahrens für Chipkartentelefone und Chipkarten besteht darin, daß die im Speicherbereich des Kartenchips hinterlegten numerischen Daten automatisch übermittelt werden und somit die Eingabeprozedur für den Anwender sich wesentlich vereinfacht und eine Falschwahl praktisch ausgeschlossen wird. Die Lösung besteht im wesentlichen aus einer Kombination aus einer Sonderfunktionstaste, die als individuell programmierbare Zielwahltaste mit einer Rufnummer, zum Beispiel eines Dienstleisters belegt ist am Chipkartentelefon und im Nummernspeicher der Telefonchipkarte, obwohl das Verfahren eine sehr hohe Sicherheit bietet, ist ein technisch einfach aufgebauter Speicherchip mit einem kleinen Speicherbereich hierfür auf der Chipkarte ausreichend.

Die Eingabe der Service-Zugangsnummer, die Wahl oder die Übermittlung der Servicenummer/Kundennummer erfolgt nun nicht mehr durch den Anwender oder durch die Karte, sondern automatisch durch das Chipkartentelefon. Dies erspart dem Anwender die Eingabe der mehrstelligen Nummer, die zum Beispiel als zwölfstellige Kartennummer/ bzw. Servicenummer beim Calling Card-Service der Deutschen Telekom AG ausgeführt ist.

Weitere Vorteile, Merkmale und Anwendungsmöglichkeiten der vorliegenden Erfindung, insbesondere der technischen Ausgestaltung, ergeben sich aus der nachfolgenden Beschreibung.

Die Erfindung wird im folgenden an mehreren Ausführungsbeispielen bzw. Varianten näher beschrieben. In der Beschreibung, in den Patentansprüchen, in der Zeichnung und in der Zusammenfassung werden die in der hinten angeführten Liste der Bezugszeichen verwendeten Begriffe und zugeordneten Bezugszeichen verwendet.

In der Zeichnung bedeuten:
- Fig. 1: ein Flußdiagramm zur Darstellung des prinzipiellen Verfahrens;
- Fig. 2: ein Flußdiagramm zur Darstellung eines modifizierten Verfahrens;
- Fig. 3: ein Flußdiagramm für ein weiteres modifiziertes Verfahren;
- Fig. 4: ein Flußdiagramm einer weiteren Variante und
- Fig. 5: eine prinzipielle Darstellung einer Einrichtung zur Durchführung des Verfahrens.

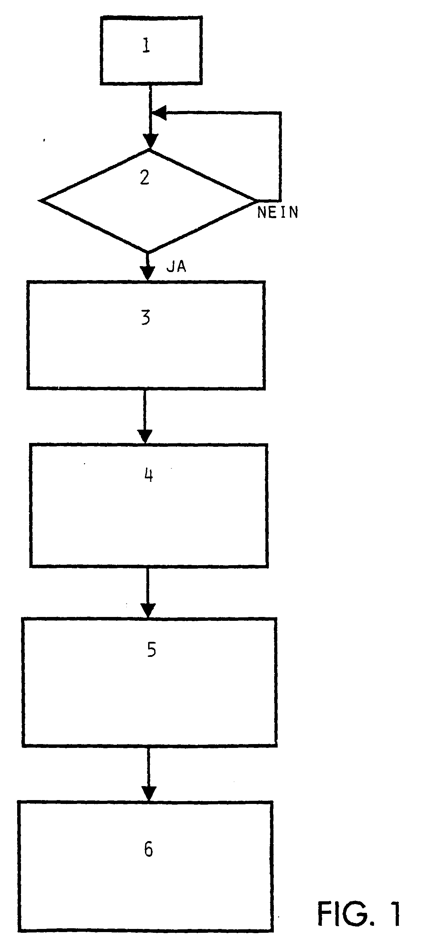

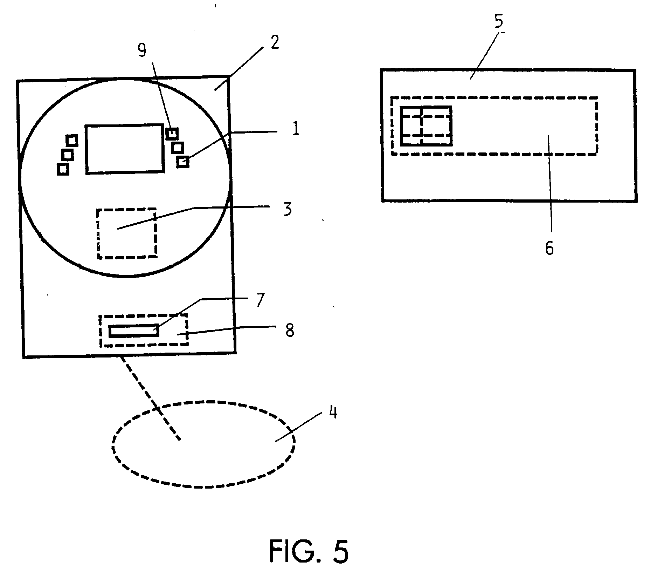

Im nachfolgenden werden anhand der Figuren 1 bis 4 vier verschiedene Varianten des erfindungsgemäßen Verfahrens beschrieben, die mit Hilfe der Einrichtung bzw. dem Gerät nach Fig. 5 implementiert werden können. Das prinzipielle Flußdiagramm nach Fig. 1 zur Darstellung des prinzipiellen Verfahrens zeigt die nacheinander durchzuführenden Verfahrensschritte 1 bis 6, die folgendes bedeuten:
- 1 =: Karten lesen
- 2 =: Sondertaste betätigen
- 3 =: Lesen der Zugangsnummer aus dem Eingabegerät, wie zum Beispiel einem Chipkartentelefon oder einem Chipkartenhintergrundsystem
- 4 =: automatische Wahl der Zugangsnummer durch das Chipkartentelefon
- 5 =: automatisches Lesen der numerischen Daten im Kartenspeicher
- 6 =: automatische Übermittlung der numerischen Daten an den Service/Dienst

Der Anwender schiebt zunächst die Chipkarte in den dafür vorgesehenen Kartenschlitz des Chipkartentelefons oder bringt sie in einen Transponderbereich, das heißt den Schreib-, Lesebereich, bei kontaktlosen Chipkarten, betätigt dann eine Sonderfunktionstaste im Schritt 2, wonach im Schritt 3 das Chipkartentelefon mit Hilfe eines Kartenlesegerätes und einer Steuersoftware automatisch die Service-Zugangsnummer aus dem Speicherbereich des Eingabegerätes, wie zum Beispiel eines Chipkartentelefons oder eines Chipkartenhintergrundsystems. Im Schritt 4 erfolgt dann die automatische Wahl der Zugangsnummer durch das Chipkartentelefon. Im Schritt 5 wird ein automatisches Lesen der numerischen Daten im Kartenspeicher, das heißt der in einem Speicherbereich der Chipkarte hinterlegten numerischen Daten durchgeführt. Im Schritt 6 erfolgt dann die automatische Übermittlung der numerischen Daten an den jeweiligen Service/Dienst.

Der Anwender muß dann anschließend nur noch seine Geheimnummer oder ein Geheimwort eingeben und erhält die Berechtigung den angewählten Service/Dienst zu nutzen.

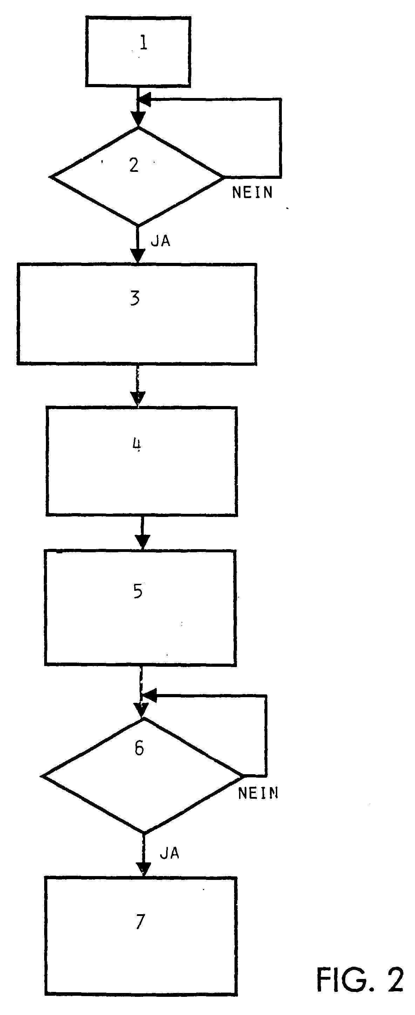

Im Flußdiagramm nach Fig. 2 sind Verfahrensschritte 1 bis 7 dargestellt, wobei die einzelnen Schritte folgendes bedeuten:
- 1 =: Karten lesen
- 2 =: Taste betätigt, ja/nein
- 3 =: Lesen der Zugangsnummer aus dem Endgerät oder dem Chipkartenhintergrundsystem
- 4 =: automatische Wahl der Zugangsnummer durch das Chipkartentelefon
- 5 =: automatisches Lesen der numerischen Daten im Kartenspeicher
- 6 =: Taste betätigt, ja/nein
- 7 =: Übermittlung der numerischen Daten an den Service/Dienst

Zur Durchführung der Ausführungsvariante des Verfahrens nach Fig. 2 schiebt der Anwender wiederum seine Chipkarte in den dafür vorgesehenen Kartenschlitz eines Chipkartentelefons oder bringt sie in den Transponderbereich, das heißt in Schreib- und Lesebereich, bei kontaktlosen Chipkarten, betätigt daraufhin eine Sonderfunktionstaste im Schritt 2, worauf gemäß Schritt 3 das Lesen der Zugangsnummer aus dem jeweiligen Endgerät oder einem Chipkartenhintergrundsystem erfolgt. Im Schritt 4 erfolgt daraufhin das automatische Wählen der Zugangsnummer durch das Chipkartentelefon und im Schritt 5 das automatische Lesen der numerischen Daten im Kartenspeicher, das heißt aus dem Speicherbereich des jeweiligen Chipkartentelefons oder aus einem Chipkartenhintergrundsystem. Gemäß Schritt 6 werden nach nochmaliger Betätigung der Sonderfunktionstaste oder einer anderen Sonderfunktionstaste in einem Schritt 7 mit Hilfe des Chipkartentelefons automatisch die in einem Speicherbereich des Chips der Telefonkarte hinterlegten numerischen Daten an den Service/Dienst übermittelt.

Anschließend muß der Anwender wiederum nur noch seine Geheimnummer bzw. sein Geheimwort eingeben und erhält die Berechtigung der Nutzung dieses Service/Dienstes.

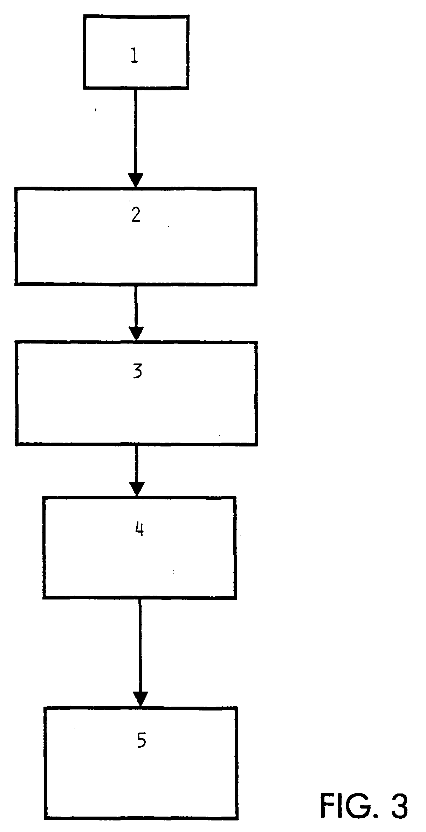

In Fig. 3 ist eine weitere Variante des erfindungsgemäßen Verfahrens prinzipiell anhand eines Flußdiagramms dargestellt, wobei die einzelnen Verfahrensschritte folgendes bedeuten:
- 1 =: Karten lesen
- 2 =: Lesen der Zugangsnummer aus dem Endgerät, wie zum Beispiel dem Speicher eines Chipkartentelefons oder des Chipkartenhintergrundsystems
- 3 =: automatische Wahl der Zugangsnummer durch das Chipkartentelefon
- 4 =: automatisches Lesen der numerischen Daten im Kartenspeicher
- 5 =: Übermittlung der numerischen Daten an den Service/Dienst.

Auch bei dieser Variante des erfindungsgemäßen Verfahrens schiebt der Anwender wiederum die Chipkarte in den dafür vorgesehenen Kartenschlitz am Kartentelefon oder bringt sie in den Transponderbereich, das heißt in den Schreib-, Lesebereich, bei kontaktlosen Chipkarten, worauf im Schritt 1 die Karte im Schritt 1 gelesen wird. Daraufhin erfolgt sofort das Lesen der Zugangsnummer aus dem Speicher des Endgerätes oder aus dem Chipkartenhintergrundsystem gemäß Schritt 2. Im Schritt 3 wählt das Chipkartentelefon automatisch die Zugangsnummer für den Service, liest automatisch die numerischen Daten aus dem Kartenspeicher gemäß Schritt 4 und übermittelt diese Daten gemäß Schritt 5 anschließend an den Service/Dienst.

Auch hier muß der Anwender lediglich noch seine Geheimnummer oder ein Geheimwort eingeben und erhält dann die Berechtigung für diesen Service, bzw. Dienst.

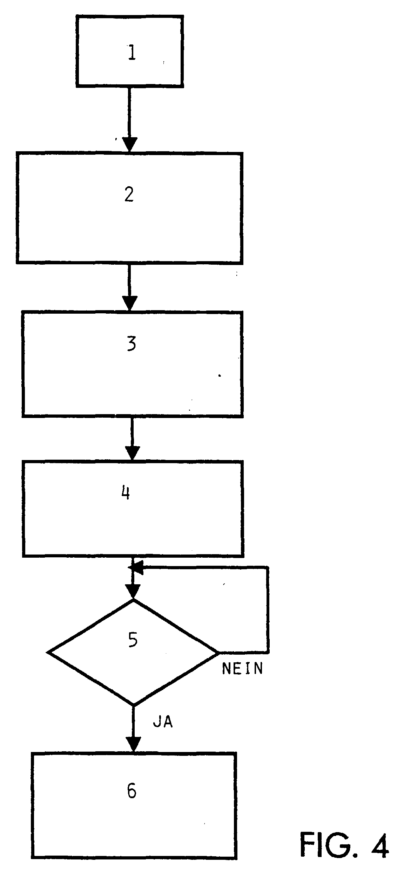

Im vierten Ausführungsbeispiel nach Fig. 4 bedeuten die einzelnen Verfahrensschritte 1 bis 6 folgendes:
- 1 =: Karten lesen
- 2 =: Lesen der Zugangsnummer aus dem Endgerät bzw. dessen Speicher oder aus dem Chipkartenhintergrundsystem
- 3 =: automatisches Wählen der Zugangsnummer durch das Chipkartentelefon
- 4 =: automatisches Lesen der numerischen Daten vom Kartenspeicher
- 5 =: Taste betätigen Ja/Nein
- 6 =: Übermittlung der numerischen Daten an den Service/Dienst

Der Anwender schiebt bei diesem Ausführungsbeispiel wiederum seine Chipkarte in den dafür vorgesehenen Kartenschlitz am Kartentelefon bzw. bei kontaktlosen Chipkarten in den Transponderbereich, wodurch gemäß Schritt 1 das Lesen der Karte veranlaßt wird. Daraufhin erfolgt im Schritt 2 das Lesen der Zugangsnummer aus dem jeweiligen Endgerät bzw. dessen Speicher oder aus dem jeweiligen Chipkartenhintergrundsystem für den Service/Dienst. Danach erfolgt die automatische Wahl der Zugangsnummer durch das Chipkartentelefon im Schritt 3 und im Schritt 4 das automatische Lesen der numerischen Daten aus dem Kartenspeicher. Das Chipkartentelefon übermittelt mit Hilfe des Kartenlesegerätes und einer zugehörigen Steuerungssoftware nach Betätigung einer Sonderfunktionstaste gemäß Schritt 5 die in einem Speicherbereich des Kartenchips hinterlegten numerischen Daten in einem Schritt 6 an den jeweiligen Service/Dienst.

Anschließend muß der Anwender auch hier wiederum nur seine Geheimnummer oder ein Geheimwort eingeben und er erhält dann die Berechtigung diesen Service/Dienst zu nutzen.

In der Fig. 5 ist eine Ausführungsform eines Gerätes, insbesondere eines Chipkartentelefons 2 sowie einer Telefonchipkarte 5 zur Durchführung des Verfahrens nach den Flow Charts der Figuren 1 bis 4 dargestellt. Das beschriebene Verfahren benötigt mindestens eine Sonderfunktionstaste 1, die individuell programmierbar ist und leicht zugänglich am Chipkartentelefon angeordnet ist. Außerdem wird eine Chipkarte 5 benötigt, die mit einem Nummernspeicher 6 ausgerüstet ist. Die individuell programmierbare Sonderfunktionstaste 1 ist zum Beispiel mit einer Rufnummer eines Services oder eines Dienstleisters belegt, die sich im Rufnummernspeicher 3 des Chipkartentelefons 2 oder in einem Chipkartenhintergrundsystem 4 befindet. Außerdem ist ein leicht zugänglicher Kartenschlitz 7 am Chipkartentelefon 2 oder ein Transponderbereich (Schreib-, Lesebereich) 8 für kontaktlose Chipkarten angeordnet. Außerdem können weitere Sonderfunktionstasten 9, die ebenfalls programmierbar ausgeführt sein können, angeordnet werden, um in Kombination mit den Sondertasten 1 die gewünschten Funktionen zu realisieren.

### Liste der Bezugszeichen

- 1,9: Sonderfunktionstasten (programmierbar)
- 2: Kartentelefon
- 3: Rufnummernspeicher
- 4: Chipkartenhintergrundsystem
- 5: Chipkarte
- 6: Nummernspeicher auf der Chipkarte
- 7: Kartenschlitz am Chipkartentelefon
- 8: Transponderbereich für kontaktlose Chipkarten

## Patentansprüche

1. Verfahren für die sichere und schnelle Handhabung von Chipkarten, insbesondere für Kartentelefone, die vorausbezahlte Geld- oder Werteeinheiten über ein vorausbezahltes Telefonkonto bzw. Poolkonto eines Netzbetreibers oder eines Diensteanbieters bei Bedarf abrufen können, wobei eine Zugangsnummer zum Service, eine persönliche Service-/Kartennummer und eine Geheimnummer oder nur eine Zugangsnummer und eine Geheimnummer benötigt werden, die über Chipkartentelefone eingelesen bzw. eingegeben werden, dadurch gekennzeichnet,
daß der Anwender nach dem Lesen der Chipkarte eine Sonderfunktionstaste (1), die als individuell programmierbare Zielwahltaste, zum Beispiel mit einer Rufnummer eines Dienstleisters belegt, am Chipkartentelefon ausgelegt ist und
daß danach durch das Endgerät mit einem Steuerprogramm automatisch die Service-Zugangsnummer wählt, und anschließend automatisch die in einem Speicherbereich des Kartenchips hinterlegten numerischen Daten an den Service-/Diensteanbieter überträgt.

2. Verfahren nach dem Oberbegriff des Patentanspruchs 1, dadurch gekennzeichnet,
daß das Chipkartentelefon automatisch die Service-Zugangsnummer wählt und nach nochmaliger Betätigung der Sonderfunktionstaste oder einer anderen Sonderfunktionstaste vom Chipkartentelefon automatisch die in einem Speicherbereich des Kartenchips hinterlegten numerischen Daten an den Service-/Diensteanbieter übermittelt.

3. Verfahren nach dem Oberbegriff des Patentanspruchs 1, dadurch gekennzeichnet,
daß nach automatischem Wählen der Zugangsnummer für den Service-/Diensteanbieter bzw. den entsprechenden Service bzw. Dienst das Chipkartentelefon automatisch die in einem Speicherbereich des Kartenchips hinterlegten numerischen Daten an den Service/Dienst überträgt.

4. Verfahren nach dem Oberbegriff des Patentanspruchs 1, dadurch gekennzeichnet,
daß das Chipkartentelefon nach Betätigung einer Sonderfunktionstaste automatisch wählt und die in einem Speicherbereich des Kartenchips hinterlegten numerischen Daten an den Service/Dienst übermittelt.

5. Verfahren nach einem der Patentansprüche 1 bis 4, dadurch gekennzeichnet,
daß es mittels einer Kombination einer individuell für einen Service bzw. Dienst programmierbaren Sonderfunktionstaste als Zielwahltaste und einen automatisch auslesbar auf der Chipkarte angeordneten Speicher für Zugangsnummern, die automatisch ausgelesen und übertragen werden, implementiert wird.
6. Verfahren nach einem der Patentansprüche 1 bis 5, dadurch gekennzeichnet,
daß der Nummernspeicher als Teil eines auf der Chipkarte befindlichen Speicherchips oder als Speicherchip mit einer Speicherkapazität nur für die Zugangsnummern ausgebildet wird.
